# FASCICULE DE BREVET EUROPEEN

(11) **EP 0 780 940 B1**
(45) Date de publication et mention de la délivrance du brevet: **15.03.2000**
(21) Numéro de dépôt: 96402535.7
(22) Date de dépôt: 26.11.1996
(51) Int. Cl.: H02B 1/30

(54) **Enveloppe, notamment pour appareils életriques**
Gehäuse, insbesondere für elektrische Geräte
Cabinet, in particular for electrical apparatuses

(30) Priorité: 19.12.1995 FR 9515695
(43) Date de publication de la demande: 25.06.1997
(73) Titulaire: Schneider Electric Industries SA, 92100 Boulogne Billancourt (FR)
(72) Inventeur: Deschamps, Jean-Christophe, 21700 Nuits-Saint-Georges (FR); Schmit, Francis, 21121 Fontaine-les-Dijon (FR)
(74) Mandataire: Saint Martin, René

(56) Documents cités:
- DE-C- 3 813 003
- DE-C- 3 923 104
- FR-A- 2 580 372
- GB-A- 2 253 456

## Description

La présente invention concerne une enveloppe devant loger notamment des appareils ou organes de distribution ou de commande électrique et munie sur l'une de ses faces d'une ouverture susceptible d'être fermée de manière étanche par un moyen d'obturation fixe ou pivotant. Le moyen d'obturation est destiné à recevoir des éléments de contrôle des appareils logés à l'intérieur de l'enveloppe et il comprend un panneau de fermeture constitué d'une plaque sensiblement transparente (voir FR-A-2 580 372 et DE-C-3 923 104).

Actuellement, l'installateur qui souhaite adjoindre à une armoire des éléments de dialogue tels que des claviers, des éléments de commande tels que des boutons-poussoirs ou des éléments de visualisation tels que des voyants lumineux, des afficheurs ou des écrans encastre ces éléments dans la porte de l'armoire en établissant des ouvertures par découpe de la tôle de la porte aux dimensions des éléments à fixer. L'usinage de ces découpes sur une surface importante et dans le matériau métallique de la porte n'est cependant pas facile.

Une autre solution de fixation des éléments consiste à découper dans la porte des cadres d'une dimension standard pour y fixer des plaques d'aluminium, elles-mêmes découpées au préalable de manière à présenter des ouvertures aux dimensions des éléments. Avec cette solution, l'usinage est plus aisé que le précédent du fait que les découpes aux dimensions des éléments de dialogue et de visualisation sont réalisées sur un support de plus petite taille que la porte de l'armoire. Toutefois il est nécessaire de réaliser des premières découpes dans la porte, même si celles-ci sont toutes à la même dimension, puis des secondes découpes adaptées aux éléments.

Les éléments de visualisation tels que les afficheurs ou les voyants lumineux ont besoin d'être vus mais ne sont pas nécessairement palpables, or les solutions de fixation décrites ci-dessus montrent que les découpes effectuées pour monter les éléments de visualisation dans la porte sont obligatoires puisque l'ensemble de la porte est opaque.

L'invention vise donc, pour une enveloppe telle qu'une armoire par exemple comprenant un moyen d'obturation, par exemple une porte, apte à recevoir des éléments de dialogue et/ou des éléments de visualisation, à conférer à ce moyen d'obturation une structure permettant d'une part de rendre visibles les éléments de visualisation sans qu'il soit nécessaire d'effectuer des découpes, et d'autre part de simplifier le montage des éléments de dialogue.

Selon l'invention, l'enveloppe est caractérisée en ce que le panneau de fermeture comprend des platines aptes à porter les éléments de contrôle et comportant des ouvertures de traversée pour ces éléments, le contour des ouvertures formant un gabarit de découpe dans le panneau d'ouvertures de passage pour lesdits éléments.

Les ouvertures sont de préférence réalisées par défoncement de zones sécables dessinées dans les platines pleines.

Les platines sont fixées mécaniquement sur un châssis qui renforce avantageusement le panneau de fermeture et qui est solidarisé du panneau par collage. Le châssis comprend des cornières de fixation des platines qui sont espacées de préférence les unes des autres d'un intervalle multiple d'un pas déterminé. Les cornières permettent par ailleurs de délimiter des zones distinctes pour divers types d'éléments de contrôle tels que des éléments de visualisation, des éléments de paramétrage ou des éléments de commande.

De plus, le panneau de fermeture peut présenter, solidaire sur tout ou partie de sa face interne, une feuille opaque. Il est découpé dans cette feuille des fenêtres transparentes de visualisation pour les éléments de contrôle à partir du gabarit de découpe déterminé par le contour des ouvertures des platines.

La description faite ci-après en regard des dessins fera ressortir les caractéristiques et avantages de l'invention. Aux dessins annexés:
- la figure 1 illustre une enveloppe de distribution électrique telle qu'une armoire;
- la figure 2 illustre une partie d'un moyen d'obturation destiné à fermer une ouverture de l'enveloppe;
- la figure 3 représente la face interne d'une partie du moyen d'obturation;
- la figure 4 représente une vue partielle d'une coupe de la figure 3;
- la figure 5 représente une variante de la figure 4;
- la figure 6 représente une vue partielle d'une autre coupe de la figure 3.

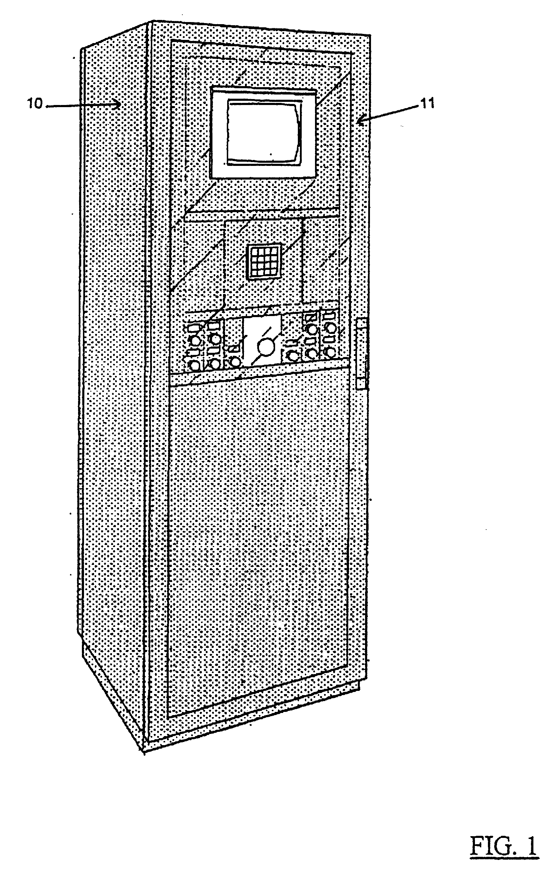

L'enveloppe 10, illustrée à la figure 1, représente une armoire électrique comportant des appareils ou organes de distribution ou de commande électrique. L'enveloppe pourrait aussi représenter un coffret de distribution électrique ou un pupitre de contrôle.

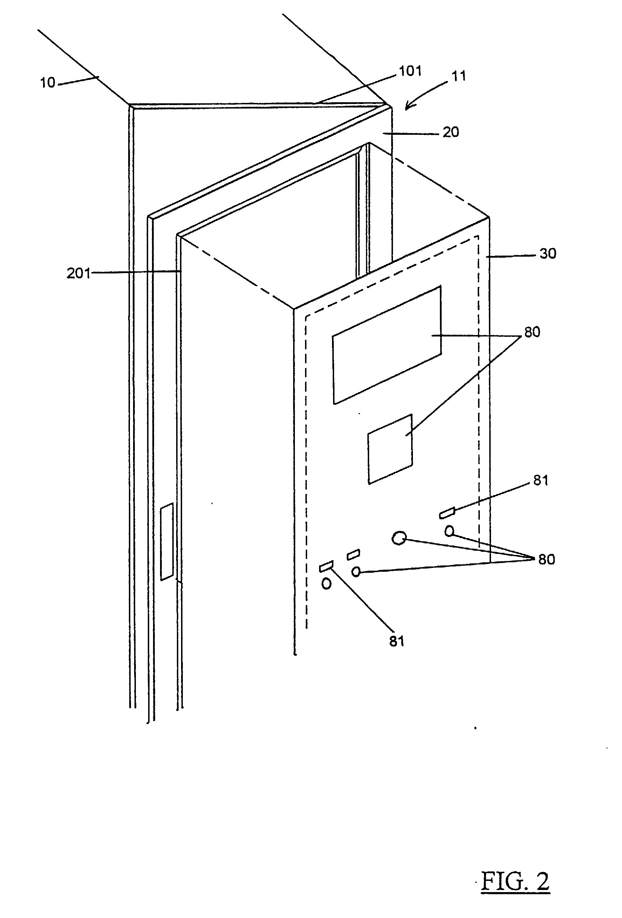

La figure 2 montre un moyen d'obturation, tel qu'une porte 11, destiné à fermer une ouverture de l'enveloppe 10.

La porte 11 présente un cadre profilé 20 et un panneau de fermeture 30 rapporté sur le contour interne 201 du cadre profilé 20.

Le cadre profilé 20 de la porte comporte des moyens d'articulation de la porte à l'enveloppe, connus en soi tels que des charnières, et coopère en position fermée de manière étanche avec le cadre 101 délimitant l'ouverture de l'enveloppe.

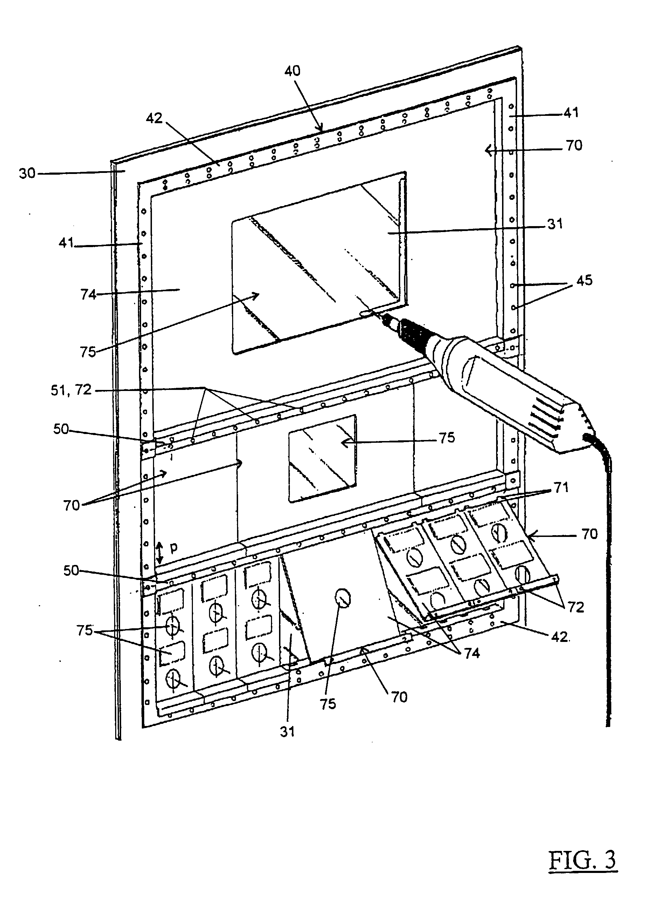

La porte 11 est destinée à recevoir des éléments de contrôle des appareils logés à l'intérieur de l'enveloppe. Les éléments de contrôle s'entendent de tous types d'éléments de visualisation tels que des afficheurs ou des voyants lumineux, d'éléments de dialogue tels que des claviers ou d'éléments de commande tels que des boutons-poussoirs. Ils sont portés par des platines 70. Dans le mode de réalisation décrit ci-après, les platines sont montées sur un châssis 40 solidaire de la face interne 31 du panneau de fermeture 30 de la porte (figure 3), mais elles pourraient être, dans une variante, rendues directement solidaires du panneau de fermeture par collage sur sa face interne 31.

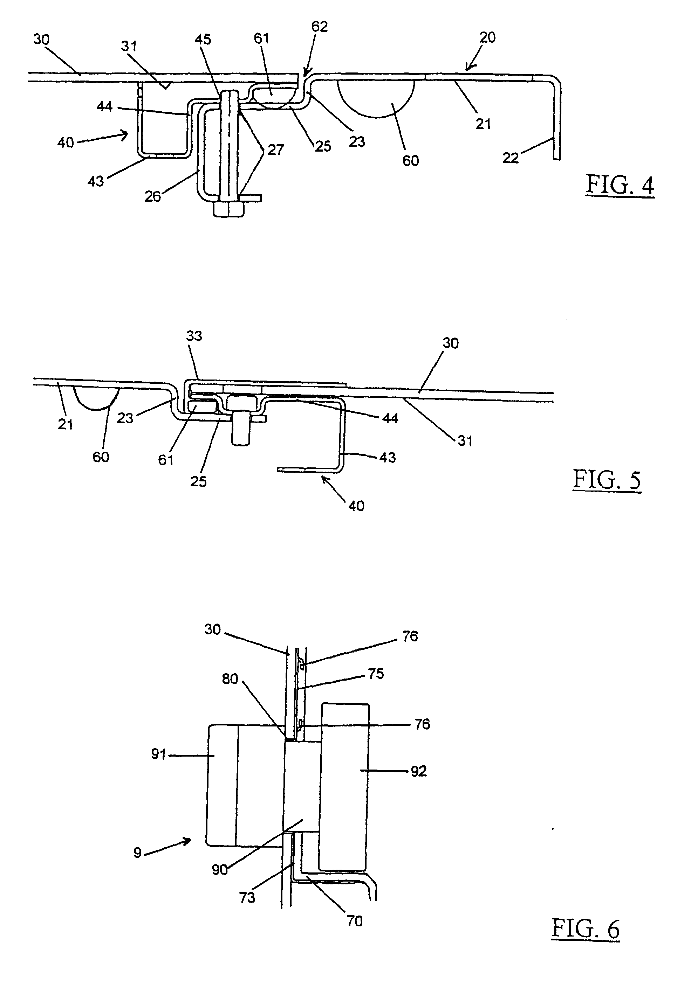

Le cadre profilé 20 de la porte présente, comme illustré à la figure 4, un profilé de section transversale en forme de U comportant une âme 21 et deux ailes parallèles externe 22 et interne 23 raccordées perpendiculairement à l'âme 21. L'aile interne 23 présente le long de son bord libre longitudinal un rebord 25 plié en équerre, parallèle à l'âme 21 et comprenant un retour 26 pour rigidifier le rebord 25. Le rebord 25 et son retour 26 sont munis de perforations fonctionnelles 27 échelonnées sur le contour du cadre. La figure 5 montre une variante de la figure 4.

Lorsque la porte 11 est fermée sur l'ouverture de l'enveloppe 10, l'étanchéité est réalisée par un joint périphérique d'étanchéité 60 qui s'étend dans l'intérieur du U du cadre profilé 20 et qui s'applique contre le cadre 101 de l'enveloppe.

Le panneau de fermeture 30 de la porte est constitué d'une plaque rigide ou souple en un matériau sensiblement transparent et facilement usinable.

Le châssis 40 destiné à recevoir les platines 70 est rapporté de manière solidaire à la face interne 31 du panneau 30.

Le châssis 40 consiste en deux montants verticaux 41 et en deux traverses 42 reliant les montants 41. Les montants 41 et les traverses 42 sont des profilés dont la section transversale comporte (figures 4 et 5) une âme 43 et au moins un aile 44 reliée à l'âme et munie de perforations 45 selon la hauteur des montants et la longueur des traverses.

La solidarisation du châssis 40 au panneau de fermeture 30 est réalisée par tout type d'assemblage, de préférence par collage, de l'aile 44 des montants et des traverses à la face interne 31 du panneau.

Le panneau de fermeture 30 est fixé au cadre profilé 20 de la porte grâce au châssis 40 solidaire du panneau, les montants verticaux 41 et les traverses 42 du châssis 40 étant fixés mécaniquement au cadre profilé 20 par coopération des perforations 45 du châssis avec les perforations 27 des rebords 25 du cadre pour autoriser la traversée de boulons d'assemblage. Après fixation, le panneau de fermeture 30 et l'âme 21 du cadre profilé sont coplanaires.

Le boulonnage peut être réalisé par l'arrière du panneau, c'est-à-dire de l'intérieur de la porte (figure 4) ou peut être réalisé par l'avant du panneau (figure 5). Pour un boulonnage extérieur illustré à la figure 5, il est nécessaire d'effectuer des trous dans l'épaisseur du panneau au niveau de quelques perforations 45 du châssis pour insérer la visserie dans le châssis 40 et le cadre profilé 20. Un cache 33 peut être ajouté sur la face externe du panneau au niveau de la visserie afin de dissimuler celle-ci une fois la fixation effectuée. La solution du boulonnage extérieur est surtout avantageuse pour des enveloppes dont l'intérieur devient inaccessible lorsque le moyen d'obturation de l'ouverture située sur une paroi de l'enveloppe n'est pas pivotant comme une porte articulée à l'enveloppe mais est fixe et constitué, tel qu'un hublot, uniquement par un panneau de fermeture. Dans ce dernier cas par ailleurs, la fixation du panneau se fait par la fixation directe du châssis sur la structure de l'enveloppe et de manière que le panneau se trouve dans le même plan que la paroi de l'enveloppe.

L'étanchéité entre le cadre profilé 20 et le panneau de fermeture 30 est réalisée par des joints 61 disposés à l'extrémité libre des ailes 44 du profilé du châssis 40 de manière à s'appuyer contre le rebord 25 des ailes du cadre profilé 20 pour rendre étanche la jonction 62 entre le cadre profilé et le panneau de fermeture solidaire du châssis.

Le châssis présente des cornières réglables 50 disposées transversalement aux montants 41 du châssis et sur lesquelles sont montées les platines 70 recevant les éléments de contrôle.

Les cornières 50 présentent deux côtés pliés en équerre qui sont munis d'une structure perforée 51. Les cornières 50 sont fixées aux montants 41 par leur côté parallèle aux montants de manière que la structure perforée 51 coopère avec les perforations 45 des montants pour autoriser la traversée d'une visserie.

Les cornières 50 sont espacées les unes des autres du multiple d'un pas p, égal par exemple à 25 mm, de manière à faciliter le montage des platines 70 dont la hauteur est un multiple du pas p.

Les cornières permettent de délimiter différentes zones de hauteur ajustable selon le type d'élément à disposer dans chaque zone. On peut par exemple distinguer trois zones constituées de haut en bas d'une zone de visualisation, d'une zone de paramétrage et d'une zone de commande qui sont destinées à recevoir respectivement des éléments de visualisation, des éléments de dialogue et des éléments de commande.

En outre, l'intérieur en équerre des cornières 50 est agencée en goulotte de passage de la filerie des éléments de contrôle, la filerie étant maintenue au moyen d'attaches clipsées dans la structure perforée 51 des cornières.

Les platines 70 recevant les éléments de contrôle comportent des picots 71 et/ou des trous de montage 72 qui sont destinés à coopérer avec la structure perforée 51 des cornières 50 et/ou avec les perforations 45 des montants 41 et des traverses 42 pour assurer leur fixation au châssis 40 par boulonnage. Dans une variante de montage, les platines 70 peuvent être fixées au châssis 40 par clipsage. Les platines présentent une face externe 73 dirigée et parallèle à la face interne 31 du panneau de fermeture 30 et une face interne 74 opposée à la face externe et dirigée vers l'intérieur de l'enveloppe lorsque la porte est fermée.

Les platines 70 sont en matériau métallique et peuvent présenter diverses formes et être de tailles différentes selon l'élément de contrôle à y fixer. Par contre elles présentent toutes au moins une ouverture 75 servant à la traversée d'un élément de façon que la face avant de l'élément soit en saillie par rapport à la face externe 73 des platines. La fixation de l'élément est réalisée sur la face interne 74 des platines par des moyens connus en soi.

Une feuille opaque est prévue solidaire de la face interne 31 du panneau 30 sur le contour du panneau, au niveau de la surface de collage entre le panneau et le châssis 40. Les platines 70 sont en tôle de couleur, pleines et munies de zones sécables qui constituent après leur défoncement les ouvertures 75. Les platines pleines couvrent toute la surface du panneau transparent 30.

Le contour des ouvertures 75 détermine un gabarit de découpe dans le panneau de fermeture 30 d'ouvertures 80 autorisant le passage des éléments de contrôle qui doivent traverser le panneau 30. Le contour des ouvertures 75 permet ainsi de guider l'outil qui sert à la découpe et de réaliser les ouvertures 80 sensiblement aux mêmes dimensions que celles des ouvertures 75 pour les éléments devant traverser le panneau 30.

Les ouvertures 75 déterminent par ailleurs dans le panneau de fermeture 30 des fenêtres sensiblement transparentes 81 de visualisation pour les éléments de contrôle tels que les éléments de visualisation ou pour les étiquettes qui ont besoin d'être visibles à travers la plaque du panneau mais pas nécessairement palpables (figures 2 et 3).

Dans une variante de réalisation, une feuille opaque est prévue solidaire sur toute la face interne 31 du panneau 30 afin de rendre la plaque du panneau opaque pour ne pas rendre visible l'intérieur de l'enveloppe lorsque les platines 70 ne couvrent pas toute la surface du panneau. Le contour des ouvertures 75 des platines détermine toujours le gabarit de découpe des ouvertures 80 et, uniquement dans l'épaisseur de la feuille opaque sans entamer l'épaisseur de la plaque du panneau 30, des fenêtres 81.

Une ouverture 75 d'une platine peut être rectangulaire lorsque la platine supporte par exemple un afficheur de forme rectangulaire.

Une ouverture 75 d'une platine peut aussi être ronde lorsque la platine supporte par exemple un bouton-poussoir 9 tel qu'illustré à la figure 6. Le corps du bouton présente une partie tubulaire 90 comprise entre la tête 91 et l'embase 92 du corps du bouton et destinée à être introduite dans l'ouverture 75.

Un bouton-poussoir ou un voyant lumineux est souvent accompagné d'une étiquette indiquant sa fonction ou respectivement sa représentation. Une ouverture 75 supplémentaire peut alors être réalisée dans la platine afin de visualiser l'étiquette montée du côté de la face interne 74 de la platine. L'étiquette est glissée dans des glissières 76 disposées de chaque côté de l'ouverture supplémentaire et formées par des ergots solidaires de la face interne 74 de la platine. Dans une variante, l'étiquette peut être glissée dans un porte-étiquette en matériau plastique transparent clipsable dans l'ouverture 75.

De façon avantageuse, l'étiquette présente sur une même face des indications inscrites tête-bêche, par exemple une fonction et un code de câblage, de manière qu'après son pliage au niveau de la séparation des deux inscriptions et après son introduction dans les glissières, l'utilisateur des éléments de contrôle puisse visualiser du côté de la face externe de la platine la fonction d'un élément de contrôle et l'installateur puisse du côté de la face interne savoir aisément réaliser le câblage électrique de cet élément de contrôle grâce au code de câblage inscrit.

La structure du panneau de fermeture telle que décrite ci-dessus, comprenant notamment la plaque transparente et les platines 70 qui permettent de monter et fixer des éléments de contrôle et qui servent de gabarit de découpe de la plaque transparente et le cas échéant de la feuille opaque, permet aisément et sans démonter le support du panneau, c'est-à-dire la porte 11 pour l'application décrite, de réaliser des ouvertures 80 pour faire apparaître les éléments de dialogue ou de commande en saillie de la porte, et des fenêtres transparentes 81 pour observer les éléments de visualisation.

Cette structure du panneau permet ainsi pour l'installateur de réaliser le montage des éléments de contrôle et leur câblage sur un panneau de fermeture d'une enveloppe dans un lieu indépendant du lieu où se situe l'enveloppe sur laquelle doit être monté le panneau.

## Revendications

1. Enveloppe devant loger notamment des appareils ou organes de distribution ou de commande électrique et munie sur l'une de ses faces d'une ouverture susceptible d'être fermée de manière étanche par un moyen d'obturation fixe ou pivotant, le moyen d'obturation étant destiné à recevoir des éléments de contrôle des appareils logés à l'intérieur de l'enveloppe et étant constitué d'un panneau de fermeture (30), le panneau de fermeture (30) étant constitué d'une plaque sensiblement transparente, caractérisée en ce que:
- le panneau de fermeture comprend des platines (70) adaptées à porter les éléments de contrôle et comportant des ouvertures (75) de traversée pour ces éléments, le contour des ouvertures formant un gabarit de découpe dans la plaque du panneau (30) d'ouvertures (80) de passage pour lesdits éléments.

2. Enveloppe selon la revendication 1, caractérisée en ce que les ouvertures (75) des platines constituent dans le panneau de fermeture (30) des fenêtres sensiblement transparentes (81) de visualisation pour les éléments de contrôle à travers la plaque du panneau.

3. Enveloppe selon la revendication 1 ou 2, caractérisée en ce que les ouvertures (75) des platines sont réalisées par défoncement de zones sécables prévues dans les platines (70) pleines.

4. Enveloppe selon l'une quelconque des revendications, caractérisée en ce que le panneau de fermeture (30) présente, solidaire sur tout ou partie de sa face interne (31), une feuille opaque.

5. Enveloppe selon la revendication 4, caractérisée en ce que le contour des ouvertures (75) des platines forme un gabarit de découpe dans la feuille opaque de fenêtres sensiblement transparentes (81) de visualisation pour les éléments de contrôle.

6. Enveloppe selon l'une quelconque des revendications précédentes, caractérisée en ce que le panneau de fermeture (30) est renforcé par un châssis (40) sur lequel sont fixées mécaniquement les platines (70).

7. Enveloppe selon la revendication 6, caractérisée en ce que le châssis (40) est solidarisé du panneau de fermeture (30) par collage.

8. Enveloppe selon l'une quelconque des revendications 6 à 7, caractérisée en ce que le moyen d'obturation consiste en une porte (11) articulée à l'enveloppe, présentant un cadre profilé (20) sur lequel se monte de manière étanche le panneau de fermeture (30) via le châssis (40).

9. Enveloppe selon l'une quelconque des revendications 6 à 8, caractérisée en ce que le châssis (40) comprend des cornières (50) de fixation des platines, les cornières étant espacées les unes des autres d'un intervalle multiple d'un pas déterminé et délimitant des zones distinctes dont chacune comporte un type différent d'éléments de contrôle.

10. Enveloppe selon la revendication 9, caractérisée en ce que l'intérieur en équerre des cornières (50) est agencée en goulotte de passage de la filerie des éléments de contrôle, la filerie étant maintenue au moyen d'attaches clipsées dans la structure perforée (51) des cornières.

11. Enveloppe selon l'une quelconque des revendications 1 à 5, caractérisée en ce que les platines (70) sont rendues solidaires de la plaque sensiblement transparente par collage sur sa face interne.

## Patentansprüche

1. Einhausung zur Aufnahme von insbesondere elektrischen Steuer- oder Verteilungsgeräten bzw. - organen, ausgerüstet an einer ihrer Seiten mit einer von einem festen oder schwenkbaren Verschlussmittel fest verschliessbaren Öffnung, wobei das Verschlussmittel Kontrollelemente der innerhalb der Einhausung angeordneten Geräte aufnehmen soll und aus einer Verschlusstafel (30) besteht,
wobei die Verschlusstafel (30) aus einer etwa durchsichtigen Platte besteht, dadurch gekennzeichnet, dass :
- die Verschlusstafel für das Tragen der Kontrollelemente geeignete Platinen (70) umfasst, mit Durchführungsöffnungen (75) für diese Elemente, wobei die Kontur der Öffnungen in der Platte der Tafel (30) Schnittschablonen von Durchführungsöffnungen (80) für die besagten Elemente bildet.

2. Einhausung nach Anspruch 1, dadurch gekennzeichnet, dass die Öffnungen (75) der Platinen in der Verschlusstafel (30) etwa durchsichtige Fenster (81) zur Visualisierung der Kontrollelemente durch die Platte der Tafel hindurch bilden.

3. Einhausung nach Anspruch 1 oder 2, dadurch gekennzeichnet, dass die Öffnungen (75) der Platinen durch Eindrücken von durchbrechbaren, in den vollen Platinen (70) vorgesehenen Zonen hergestellt werden.

4. Einhausung nach einem der Ansprüche, dadurch gekennzeichnet, dass die Verschlusstafel (30) auf ihrer gesamten Innenseite (31) oder einem Teil davon einen undurchsichtigen Film aufweist.

5. Einhausung nach Anspruch 4, dadurch gekennzeichnet, dass die Kontur der Öffnungen (75) der Platinen im undurchsichtigen Film eine Schnittschablone für etwa durchsichtige Fenster (81) bildet, um die Kontrollelemente zu visualisieren.

6. Einhausung nach einem der vorstehend genannten Ansprüche, dadurch gekennzeichnet, dass die Verschlusstafel (30) von einem Rahmen (40) verstärkt wird, an dem die Platinen (70) mechanisch befestigt sind.

7. Einhausung nach Anspruch 6, dadurch gekennzeichnet, dass der Rahmen (40) mit der Verschlusstafel (30) verklebt ist.

8. Einhausung nach einem der Ansprüche 6 bis 7, dadurch gekennzeichnet, dass das Verschlussmittel aus einer an der Einhausung angelenkten Tür (11) besteht, die einen Profilrahmen (20) aufweist, an dem die Verschlusstafel (30) über den Rahmen (40) dicht montiert wird.

9. Einhausung nach einem der Ansprüche 6 bis 8, dadurch gekennzeichnet, dass der Rahmen (40) Winkeleisen (50) zur Befestigung der Platinen umfasst, wobei die Winkeleisen in Intervallen angeordnet sind, die einem Mehrfachen eines vorgegebenen Abstands entsprechen, und die getrennte Zonen abgrenzen, die jeweils eine andere Art von Kontrollelementen beinhalten.

10. Einhausung nach Anspruch 9, dadurch gekennzeichnet, dass die winkelförmige Innenseite der Winkeleisen (50) als Durchführungskanal der Drähte der Kontrollelemente ausgebildet ist, wobei die Drähte mit an der Lochstruktur (51) der Winkeleisen aufgeklipsten Klammern festgehalten werden.

11. Einhausung nach einem der Ansprüche 1 bis 5, dadurch gekennzeichnet, dass die Platinen (70) auf die Innenseite der etwa transparenten Platte aufgeklebt werden.

## Claims

1. Enclosure, in particular for house appliances or organs of electrical distribution or control and equipped on one of its faces with an aperture which can be closed and made watertight through a fixed or swiveling means of blocking, this means of blocking being designed to receive control elements of the appliances housed inside the enclosure and comprising a closing panel (30), characterized in that:
- the closing panel (30) consists of a substantially transparent plate,
- the closing panel comprises plates (70) adapted to carrying the control elements and including crossing apertures (75) for these elements, the contour of the apertures forming a cutting template in the plate of the panel (30) of apertures (80) for the passage of said elements.

2. Enclosure according to claim 1, characterized in that the apertures (75) of the plates constitute in the closing panel (30) substantially transparent windows (81) for display of the control elements through the plate of the panel.

3. Enclosure according to claims 1 or 2, characterized in that the apertures (75) of the plates are created by pushing in cuttable zones provided in the solid plates (70).

4. Enclosure according to any one of the previous claims, characterized in that the closing panel (30) shows an opaque sheet (31) firmly attached over all or part of its inner face (31).

5. Enclosure according to claim 4, characterized in that the contour of the apertures (75) of the plates forms a cutting template in the opaque sheet of substantially transparent windows (81) for the display of control elements.

6. Enclosure according to any one of the previous claims, characterized in that the closing panel (30) is reinforced by a chassis (40) on which the plates (70) are fixed mechanically.

7. Enclosure according to claim 6, characterized in that the chassis (40) is attached firmly by gluing to the closing panel (30).

8. Enclosure according to one of claims 6 or 7, characterized in that the means of blocking consists of a door (11) joined to the enclosure, showing a profiled frame (20) on which the closing panel (30) is fitted and sealed watertight via the chassis (40).

9. Enclosure according to any one of claims 6 to 8, characterized in that the chassis (40) comprises angles (50) for fixing the plates, the angles being spaced from each other at an interval which is a multiple of a given pitch and marking distinct zones each of which includes a different type of control element.

10. Enclosure according to claim 9, characterized in that the right-angled interior of the angles (50) is arranged as a duct allowing the passage of the wiring for the control elements, the wiring being held in position by clip-on attachments in the perforated structure (51) of the angles.

11. Enclosure according to any one of claims 1 to 5, characterized in that the plates (70) are attached firmly to the substantially transparent panel by means of gluing on its inner face.
